(19) Europäisches Patentamt
European Patent Office
Office européen des brevets

(11) EP 4 711 806 A1

(12) EUROPEAN PATENT APPLICATION

(43) Date of publication:
18.03.2026 Bulletin 2026/12

(21) Application number: 24200030.5

(22) Date of filing: 12.09.2024

(51) International Patent Classification (IPC):
G01S 7/292 (2006.01)        G01S 7/35 (2006.01)
G01S 13/00 (2006.01)        G01S 13/58 (2006.01)
G01S 13/931 (2020.01)

(52) Cooperative Patent Classification (CPC):
G01S 13/931; G01S 7/2927; G01S 7/35;
G01S 13/006; G01S 13/582; G01S 13/584

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: NXP B.V.
5656 AG Eindhoven (NL)

(72) Inventors:
• Laemmerer,, Dominik
5656 AG Eindhoven (NL)
• Gruber,, Andreas
5656 AG Eindhoven (NL)
• Saracevic,, Omar
5656 AG Eindhoven (NL)

(74) Representative: Krott, Michel
NXP Semiconductors
Intellectual Property Group
High Tech Campus 60
5656 AG  Eindhoven (NL)

Remarks:
Amended claims in accordance with Rule 137(2) EPC.

(54) **A RADAR PROCESSOR**

(57)    A cell-averaging constant false alarm rate, CA-CFAR, radar processor configured to: receive a two-dimensional radar data array (202); for each of a plurality of pairs of one-dimensional vectors (204-1, 204-2): perform a convolution between the two-dimensional radar data array (202) and a first one-dimensional vector (204-1) of the pair of one-dimensional vectors to obtain an intermediate convolution result (210); and perform a convolution between the intermediate convolution result (210) and a second one-dimensional vector (204-2) of the pair of one-dimensional vectors to obtain an intermediate CA-CFAR result (208); and combine the intermediate CA-CFAR results to provide a CA-CFAR output.

Figure 4

## Description

### Field

The present disclosure relates to a radar processor and associated methods, and in particular to a cell-averaging constant false alarm rate (CA-CFAR) radar processor and associated methods.

### Summary

According to a first aspect of the present disclosure there is provided a cell-averaging constant false alarm rate, CA-CFAR, radar processor configured to:

receive a two-dimensional radar data array;
for each of a plurality of pairs of one-dimensional vectors:

perform a convolution between the two-dimensional radar data array and a first one-dimensional vector of the pair of one-dimensional vectors to obtain an intermediate convolution result; and
perform a convolution between the intermediate convolution result and a second one-dimensional vector of the pair of one-dimensional vectors to obtain an intermediate CA-CFAR result; and

combine the intermediate CA-CFAR results to provide a CA-CFAR output.

In one or more embodiments, the processor may be configured to combine the intermediate CA-CFAR results using superposition.

In one or more embodiments, the radar processor may be configured to receive a plurality of superposition coefficients, each superposition coefficient corresponding to a respective pair of one-dimensional vectors, wherein the superposition coefficient indicates whether the intermediate CFAR result corresponding to the respective pair of one-dimensional vectors should be combined using addition or subtraction.

In one or more embodiments, the processor may be configured to obtain the plurality of pairs of one-dimensional vectors from stored kernel data. If the stored kernel data only includes a single one-dimensional vector corresponding to a pair of one-dimensional vectors, the controller may be configured to obtain the pair of one-dimensional vectors by:

obtaining the single one-dimensional vector as a first one-dimensional vector of the pair of one-dimensional vectors; and
transposing the single one-dimensional vector to obtain a second one-dimensional vector of the pair of one-dimensional vectors.

In one or more embodiments, for each pair of one-dimensional vectors:

convolution of the first one-dimensional vector with the second one-dimensional vector may generate a respective two-dimensional sub-kernel; and
superposition of each two-dimensional sub-kernel may generate a two-dimensional CA-CFAR radar processing kernel.

In one or more embodiments, each pair of one-dimensional vectors may have been derived from a two-dimensional CA-CFAR radar processing kernel. Each pair of one-dimensional vectors may have been calculated by: generating a plurality of two-dimensional sub-kernels from two-dimensional CA-CFAR radar processing kernel; and spatially separating each of the plurality of two-dimensional sub-kernels into a respective pair of one-dimensional vectors.

In one or more embodiments, each pair of one-dimensional vectors may be such that, or satisfy a condition that:

convolution of the first one-dimensional vector with the second one-dimensional vector generates a respective two-dimensional sub-kernel; and
superposition of each two-dimensional sub-kernel generates a two-dimensional CA-CFAR radar processing kernel.

In one or more embodiments, the two-dimensional CA-CFAR radar kernel may comprise:

a target cell (which may be referred to as a central cell or a cell under test);
a plurality of guard cells surrounding the target cell; and

a plurality of reference cells surrounding the guard cells.

In one or more embodiments, each two-dimensional sub-kernel may have the same dimensions as the CA-CFAR radar processing kernel.

According to a second aspect of the present disclosure, there is provided a method for performing cell-averaging constant false alarm rate, CA-CFAR, radar processing, the method comprising:

receiving a two-dimensional radar data array;
for each of a plurality of pairs of one-dimensional vectors:

performing a convolution between the two-dimensional radar data array and a first one-dimensional vector of the pair of one-dimensional vectors to obtain an intermediate convolution result; and
performing a convolution between the intermediate convolution result and a second one-dimensional vector of the pair of one-dimensional vectors to obtain an intermediate CA-CFAR result; and

combining the intermediate CA-CFAR results to provide a CA-CFAR output.

According to a third aspect of the present disclosure there is provided a processing apparatus configured to perform any method disclosed herein.

According to a fourth aspect of the present disclosure, there is provided an integrated circuit comprising any processing apparatus disclosed herein.

According to a fifth aspect of the present disclosure, there is provided a computer implemented method for simplifying a two-dimensional cell-averaging constant false alarm rate, CA-CFAR, radar processing kernel, the method comprising:

receiving a two-dimensional CA-CFAR radar processing kernel;
generating a plurality of two-dimensional sub-kernels from two-dimensional CA-CFAR radar processing kernel;
spatially separating each of the plurality of two-dimensional sub-kernels into a respective pair of one-dimensional vectors; and
storing kernel data representing the plurality of pairs of one-dimensional vectors in a memory of an integrated circuit.

In one or more embodiments, the plurality of two-dimensional sub-kernels may satisfy a condition that the plurality of two-dimensional sub-kernels combine by superposition to form the two-dimensional CA-CFAR radar processing kernel.

In one or more embodiments, the kernel data may comprise a plurality of superposition coefficients corresponding to each respective sub-kernel. Each superposition coefficient may indicate whether the respective sub-kernel is combined by superposition using addition or subtraction.

In one or more embodiments, generating the plurality of two-dimensional sub-kernels may comprise generating a plurality of spatially separable two-dimensional sub-kernels.

In one or more embodiments, storing the kernel data may comprise storing only a first one-dimensional vector of the pair of one-dimensional vectors if the respective sub-kernel is symmetric.

In one or more embodiments, each two-dimensional sub-kernel may have the same dimensions as the CA-CFAR radar processing kernel.

In one or more embodiments, spatially separating each of the plurality of two-dimensional sub-kernels may comprise spatially separating each of the plurality of two-dimensional sub-kernels into a respective pair of one-dimensional vectors, such that for each pair, convolution of the first one-dimensional vector with the second one-dimensional vector generates the respective two-dimensional sub-kernel.

In one or more embodiments, the method may further comprise:

trimming one or more two-dimensional sub-kernels to remove outer zeros; or
trimming one or more pairs of one-dimensional vectors to remove outer zeros.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

## Brief Description of the Drawings

One or more embodiments will now be described by way of example only with reference to the accompanying drawings in which:

Figure 1 illustrates an example 2D convolution process between a data array and a 2D kernel;
Figure 2 illustrates an example 1.5D convolution that results in the same convolution output as the example of Figure 1;
Figure 3A illustrates an example 2D CA-CFAR radar processing kernel;
Figure 3B illustrates another example 2D CA-CFAR radar processing kernel;
Figure 4 illustrates a process of simplifying a 2D CA-CFAR radar processing kernel according to an embodiment of the present disclosure; and
Figure 5 illustrates a method for performing CA-CFAR radar processing according to an embodiment of the present disclosure.

## Detailed Description

Implementing a two-dimensional (2D) constant false alarm rate (CFAR) algorithm using conventional approaches is not possible on systems that do not have 2D convolution capabilities. 2D CFAR algorithms also require a large number of processing operations.

The present disclosure provides apparatus and methods that can provide 2D CFAR radar processing capability using one-dimensional (1D) convolutions and a reduced number of operations. As a result, CFAR capability can be provided in applications that typically have reduced processing power such as internet of things, automotive and mobile applications.

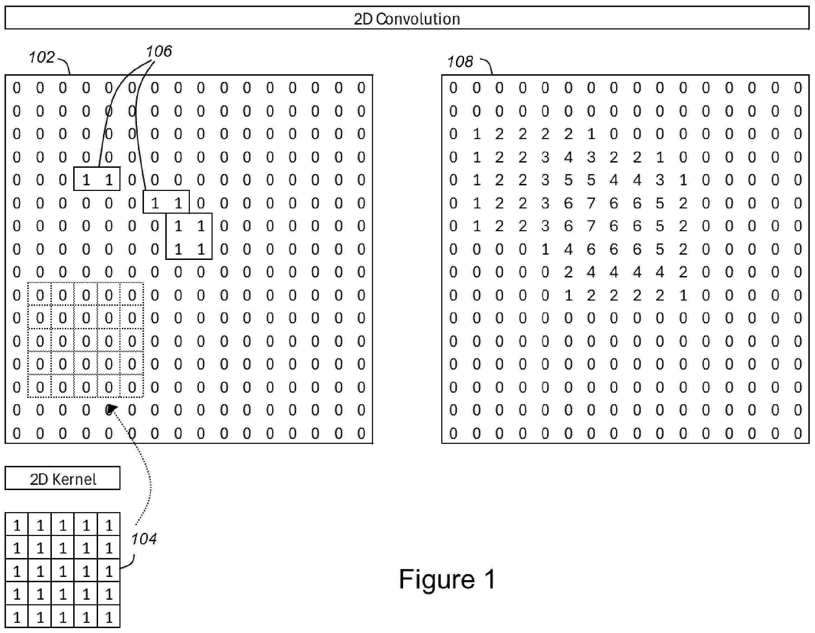

For background, Figure 1 illustrates an example 2D convolution process between a data array 102 and a 2D kernel 104.

The data array 102 may correspond to a data array under test, for example radar scan data. The radar data scan may comprise a range-Doppler-matrix. In this example, the data array comprises an array of 16x16 data cells. Most data cells have a value of 0, however some data cells 106 have a value of 1 which may indicate a feature of interest.

The 2D kernel 104 comprises an array of 5x5 kernel cells. In this example, all kernel cells comprise a value of 1.

A convolution operation effectively sweeps the kernel array 104 across each data cell of the data array 102. Boundary conditions for convolutions can be calculated in a number of different ways. In the illustrated example, a sum of products of each overlapping kernel cell and data cell is calculated for each kernel position. A convolution output 108 illustrates the result of the convolution of the data array 102 with the kernel array 104.

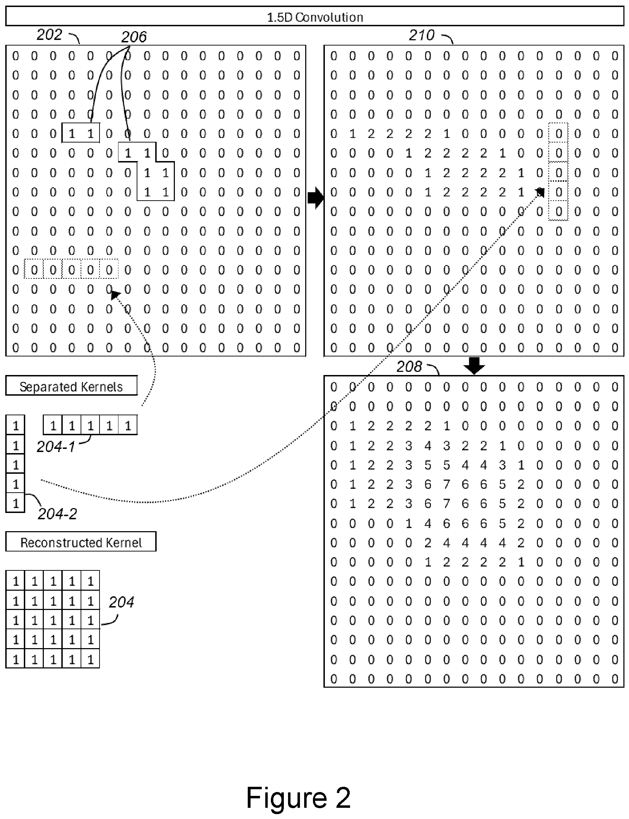

Figure 2 illustrates an example "1.5-dimensional" (1.5D) convolution that results in the same convolution output 208 as the example of Figure 1. Features of Figure 2 that are also shown in Figure 1 have been given corresponding reference numbers in the 200 series and will not necessarily be described again here.

In this example, the 2D kernel has been spatially separated into two 1D vectors 204-1, 204-2. The 2D kernel 204 of Figure 1 can be expressed as the convolution of the pair of 1D vectors 204-1, 204-2. In particular, the 5x5 2D kernel 204 can be expressed as the convolution of a 1x5 1D vector 204-1 and a 5x1 1D vector 204-2.

The 1.5D convolution operation comprises: (i) a 1D convolution between the data array 202 and the first 1D vector 204-1 to produce an intermediate convolution result 210; and (ii) a 1D convolution between the intermediate convolution result 210 and the second 1D vector 204-2 to produce a convolution output 208 that is identical to the output of the 2D convolution operation of Figure 1. As described herein, a 1D convolution between a 1D vector and a 2D data array may comprise a convolution between the 1D vector and each row or column of the 2D data array (depending on the dimension of the 1D array).

However, the example of Figure 2 requires that the 2D kernel 204 is spatially separable into the pair of 1D vectors 204-1, 204-2. In other words, the example requires that the 2D kernel 204 can be formed via the convolution of a pair of 1D vectors 204-1, 204-2.

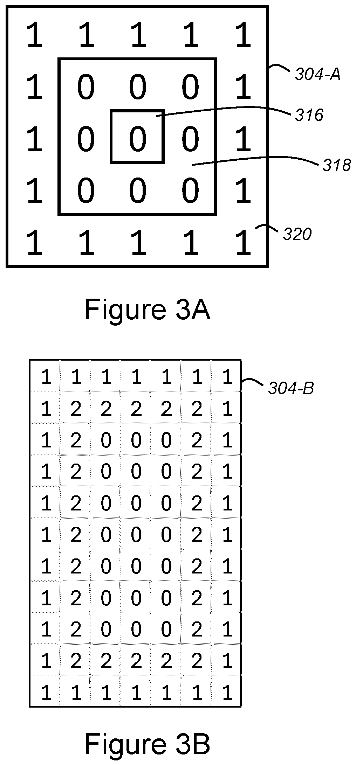

Figures 3A and 3B illustrate example 2D CA-CFAR radar processing kernels 304.

Figure 3A illustrates a simple example of a 2D CA-CFAR radar processing kernel 304. CA-CFAR algorithm uses a kernel $K(m, n)$ 304-A (here, the number of rows, $m$, and the number of columns, $n$, both equal 5 in this example) that describes an area around a data cell under test that is used to calculate its average cell value, while allowing for an average background value that may vary over the data array. The kernel 304 comprises: a target cell 316 that will overlap the data cell under test; a plurality of guard cells 318 surrounding the target cell 316; and a plurality of reference cells 320 that surround the guard cells. The reference cells 320 can be used to compute the average background value. The guard cells 318 are not used in the computation of the average background value and act to avoid any signal features of the data cell under test from influencing the computation of the average background value. The computed average background value can be used to derive a threshold value (most often via scaling). The data cell under test can then be compared against this computed threshold value. To calculate this cell average for every data cell of a 2D data array $A(x,y)$ with $x$ rows and $y$ columns (dimension of ($xx$ $y$)) a 2D convolution between the data array and the kernel 304 is performed. This results in a number of operations equal to $n*m*x*y$.

Figure 3B illustrates a more realistic 2D CA-CFAR radar processing kernel. In this example the 2D kernel 304-B comprises a 11x7 kernel array.

The 2D convolution between a data array $A(x,y)$ and either CA-CFAR kernel of Figure 3A or 3B cannot be performed using the 1.5D convolution process of Figure 2 because the CA-CFAR kernels are not spatially separable. The presence of the guard cells 318 and the reference cells 320 result in a 2D kernel that cannot be expressed as the convolution of a pair of 1D vectors.

One approach to reducing the number of operations for CFAR using a 2D CA-CFAR kernel such as those of Figure 3, is to represent the kernel as a cross-shaped kernel. A cross-shaped kernel is a 2D kernel where only one column and one row contain non-zero coefficients (the remaining cells are zero). The number of operations may be reduced because most coefficients are zero. However, 2D convolution capability is still required to perform a 2D convolution between the cross-shaped kernel and the radar data array and performance is reduced because very few cells with non-zero coefficients are used in the noise calculation. In this way, the cross-shaped kernel results in a reduction in detection probability relative to using the original 2D CA-CFAR kernel.

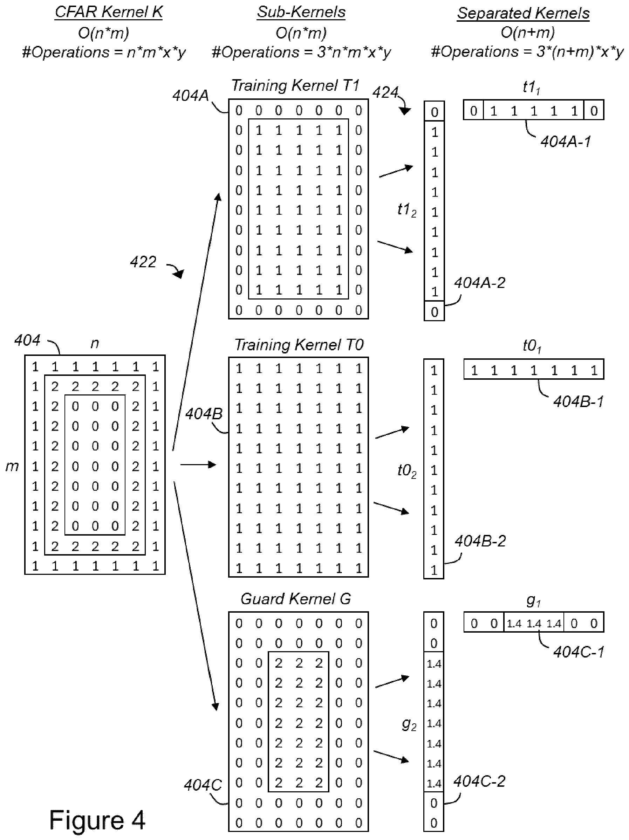

Figure 4 illustrates a process of simplifying a 2D CA-CFAR radar processing kernel according to an embodiment of the present disclosure. The method can separate the 2D CA-CFAR kernel into a plurality of pairs of 1D vectors such that a CA-CFAR radar process can be carried out using 1D convolutions. As a result, CA-CFAR radar processing can be implemented on processing apparatus that do not have 2D convolution capability, such as simple integrated circuits (ICs).

A first step comprises receiving the 2D CA-CFAR radar processing kernel 404 (labelled in the figure as *"CFAR Kernel K").* The 2D CA-CFAR radar processing kernel 404 may be selected by a user. In this example, the 2D CA-CFAR radar processing kernel 404 comprises a $m \times n$ kernel, $K(m,n)$.

A second step 422 comprises generating a plurality of sub-kernels 404A, 404B, 404C, (labelled in the Figure as "Training Kernel T1", "Training Kernel T0" and "Guard Kernel G") that combine (e.g. by summing or superposition) to form the 2D CA-CFAR radar processing kernel 404. In this step, the distributivity property of convolution is utilized to apply the superposition principle and generate a plurality ($n_{sub}$) of sub-kernels that sum up to the original kernel. In this example, the 2D sub-kernels 404A, 404B, 404C, have the same dimension ($m \times n$) as the 2D CA-CFAR radar processing kernel 404. The 2D CA-CFAR kernel 404 can be expressed as the superposition of the sub-kernels 404A, 404B, 404C:

$$K_{m,n} = T1_{m,n} + T0_{m,n} - G_{m,n} \qquad (1)$$

In the illustrated example, the term for sub-kernel G is subtracted from the sum of the sub kernels T0 and T1 such that the superposition results in the 2D CA-CFAR kernel 404.

Due to the distributivity of convolution, performing a convolution between a data array, $A(x,y)$, and each sub-kernel 404A, 404B, 404C, and summing the results would result in the same convolution result as performing a convolution between the data array, $A(x,y)$, and the original 2D CA-CFAR radar processing kernel, $K$:

$$CONV_{2D}(A,K) = CONV_{2D}(A,T1) + CONV_{2D}(A,T0) - CONV_{2D}(A,G) \qquad (2)$$

However, the number of operations would increase from $n*m*x*y$ to $n_{sub}*n*m*x*y$ ($n_{sub}$ equals three in this example). Consistent with equation 1, for the illustrated example, the third term of equation 2 is subtracted from the sum of the first two terms to provide a superposition equivalent to a convolution with the 2D CA-CFAR kernel 404.

A third step 424 comprises spatially separating each two-dimensional sub-kernel 404A, 404B, 404C into a respective pair of 1D vectors 404A-1, 404A-2, 404B-1, 404B-2, 404C-1, 404C-2 (labelled respectively in the figure as ($t1_1$, $t1_2$), ($t0_1$, $t0_2$), and ($g_1$, $g_2$)). The pair of 1D vectors will have respective dimensions of ($1 \times n$) and ($m \times 1$).

As described herein, spatially separating a 2D kernel refers to separating the 2D kernel into two 1D vectors that combine via convolution to form the 2D kernel. The term "spatially separable" in relation to a 2D array is a mathematical property which means that the 2D array can be expressed as the convolution of two 1D vectors. In this way, it follows from this third step 424, that the sub-kernels 404A, 404B, 404C generated in the second step 422 are spatially separable.

As a result of the spatial separation and the associativity property of convolution, the convolution between the data array, $A(x,y)$, and each 2D sub-kernel 404-A, 404-B, 404-C can be calculated as:

$$CONV_{2D}(A, T1) = CONV_{1D}(CONV_{1D}(A, t1_1), t1_2)$$

$$CONV_{2D}(A, T0) = CONV_{1D}(CONV_{1D}(A, t0_1), t0_2)$$

$$CONV_{2D}(A, G) = CONV_{1D}(CONV_{1D}(A, g_1), g_2)$$

The number of operations for each sub-kernel convolution becomes $(n+m)*x*y$. Therefore, the convolution between the data array, $A(x,y)$, and the original 2D CA-CFAR kernel, $K$, can be calculated as:

$$CONV_{2D}(A, K) = CONV_{1D}(CONV_{1D}(A, t1_1), t1_2) + CONV_{1D}(CONV_{1D}(A, t0_1), t0_2) - CONV_{1D}(CONV_{1D}(A, g_1), g_2) \qquad (3)$$

In other words, the 2D convolution using the 2D CA-CFAR kernel, $K$, has been simplified to comprise a plurality of 1D convolutions. The number of operations has been reduced from $n*m*x*y$ to $n_{sub}*(n+m)*x*y$. Consistent with equations 1 and 2, for the illustrated example, the third term of equation 3 is subtracted from the sum of the first two terms to provide a superposition equivalent to a convolution with the 2D CA-CFAR kernel 404.

The process of Figure 4 may be implemented when compiling software for a radar processing apparatus. For example, a user may select or define a desired 2D CA-CFAR radar processing kernel 404. A computer implemented method may comprise the first to third steps to determine a plurality of pairs of 1D vectors 404A-1, 404A-2, 404B-1, 404B-2, 404C-1, 404C-2 that can be used to calculate a 2D convolution between a data array and the 2D CA-CFAR radar processing kernel 404 using only 1D convolutions according to equation 3 above. The method may comprise storing kernel data representing the plurality of pairs of 1D vectors 404A-1, 404A-2, 404B-1, 404B-2, 404C-1, 404C-2 as part of a radar processing software image for loading onto a radar processing chip (IC). The software image may further comprise instructions for defining the operational steps according to equation 3. In particular, the kernel data may comprise a plurality of superposition coefficients defining each superposition operation (addition or subtraction) of equation 3 (and equation 2). In other words, each superposition coefficient corresponds to a respective sub-kernel 404A, 404B, 404C and/or respective pair of 1D vectors. Once the software image has been loaded onto the radar processing chip, the radar processing chip can perform CA-CFAR radar processing using only 1D convolutions and a reduced number of operations.

The kernel data may comprise the plurality of pairs of 1D vectors. However, for symmetric 2D sub-kernels (that is a 2D sub-kernel that is equal to its transpose), the resulting pair of 1D vectors will be a transpose of each other. As a result, only a single 1D vector of the pair of 1D vectors may need to be stored. In this way, the kernel data may comprise only a first 1D vector of the pair of 1D vectors, if the respective 2D sub-kernel is symmetric. In such examples, the kernel data may include a symmetric indicator identifying any 1D vectors that correspond to a symmetric sub-kernel. In some examples, the absence of a second 1D vector in the kernel data may indicate that the respective 2D sub-kernel is symmetric.

The method may comprise identifying that the 2D sub-kernel is symmetric by: identifying if the 2D sub-kernel is equal to its transpose. This may include an initial check if the sub-kernel is a square kernel (n=m) before the transpose comparison. In some examples, the method may comprise identifying the 2D sub-kernel as symmetric if the first 1D vector is a transpose of the second 1D vector.

In the illustrated example, the third sub-kernel 404C having values of 0 or 2 has been spatially separated into two 1D vectors 404C-1 and 404-C2 with values of 0 or 1.4. Here, 1.4 is an approximation of $\sqrt{2}$. Other examples may store 1D vectors having values with more or less precision or may store a representation of a surd such as $\sqrt{2}$. In yet further examples, a sub-kernel can be spatially separated into two one-dimensional vectors having different non-zero values. For the example of the third sub-kernel 404C of Figure 4, the first 1D vector 404C-1 may have values of 1 instead of 1.4 and the second 1D vector 404C-2 may have values of 2 instead of 1.4, or vice versa.

In some examples, the method may further comprise trimming outer zeros from one or more sub-kernels 404A, 404B, 404C or from one or more 1D vectors 404A-1, 404A-2, 404B-1, 404B-2, 404C-1, 404C-2. Such trimming can advantageously reduce storage requirements. In examples using trimming, the kernel data may comprise trimming indication data identifying that data representing a respective pair of 1D vectors has been trimmed. The trimming data may include dimension data enabling the 1D vector to be restored to the correct size. For example, the dimension data may identify the extent of the trimming and/or the untrimmed dimension of the sub-kernel / pair of 1D vectors. The dimension data may include an offset or shift indicating that the stored 1D vector should be shifted to recentre the 1D vector and pad the outer edges with zeros accordingly.

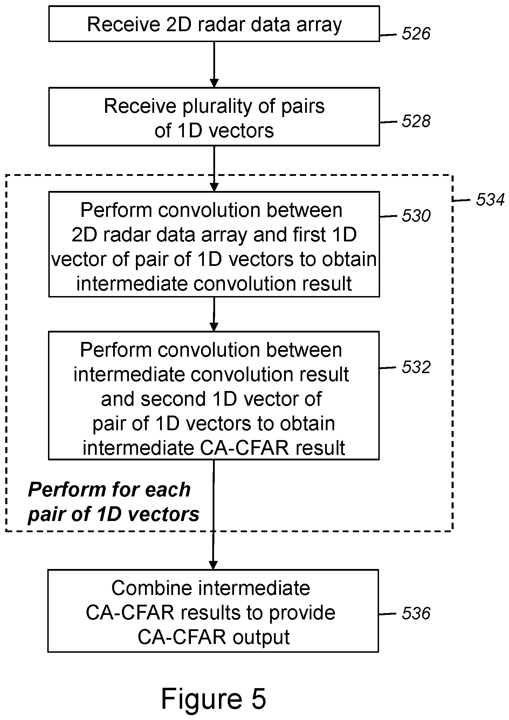

Figure 5 illustrates a method for performing CA-CFAR radar processing according to an embodiment of the present disclosure. The method may be performed by a radar processing device. The radar processing device may comprise a processor and a memory comprising instructions that when executed by the processor cause the processor to carry out the method. In some examples, a pure hardware implementation (HW Multipliers, Coefficient RAM, Data-RAM,) may carry out the method.

A first step 526 comprises receiving a 2D radar data array. The 2D radar data array may comprise data from a radar scanning apparatus, for example an ultra-wideband (UWB) radar scanning apparatus.

A second step 528 comprises obtaining or retrieving a plurality of pairs of 1D vectors from kernel data, representing the plurality of 1D pairs, stored in a memory. Each pair of 1D vectors may correspond to a pair of 1D vectors generated in the third step 424 of Figure 4. That is, convolution of a first 1D vector and a second 1D vector of each pair of 1D vectors may generate a respective 2D sub-kernel. Superposition of the resulting plurality of 2D sub-kernels may generate a 2D CA-CFAR radar processing kernel. Here a 2D CA-CFAR radar processing kernel may relate to a kernel comprising: a target cell for overlapping a data cell under test; a plurality of guard cells surrounding the target cell; and a plurality of reference cells surrounding the guard cells.

In some examples, the kernel data may include the pair of 1D vectors for one or more of the plurality of pairs of 1D vectors. In some examples, a single 1D vector may represent a respective pair of 1D vectors for one or more of the plurality of pairs of 1D vectors. The method may comprise transposing the single 1D vector to obtain a second one of the respective pair of 1D vectors. Such single vectors can correspond / represent a symmetric sub-kernel. In this way, for at least one pair of 1D vectors, obtaining the pair of 1D vectors may comprise: obtaining a first 1D vector of the pair of 1D vectors from the kernel data; and transposing the first 1D vector to obtain a second 1D vector of the pair of 1D vectors. For other pairs of 1D vectors, obtaining the pair of 1D vectors may comprise obtaining both the first 1D vector and the second 1D vector of the pair from the kernel data.

In some examples, the kernel data may include trimming indication data indicating that the outer zeros have been trimmed from one or more of the 1D vectors. The trimming indication data may indicate an untrimmed dimension of the 1D vector. The method may comprise padding the 1D vector with zeros and/or offsetting the 1D vector so that the 1D vector has the untrimmed dimension.

A third step 530 comprises performing a convolution between the 2D radar data array and a first 1D vector of a first pair of 1D vectors to obtain an intermediate convolution result.

A fourth step 532 comprises performing a convolution between the intermediate convolution result and a second 1D vector of the first pair of 1D vectors to obtain an intermediate CA-CFAR result.

As illustrated by dashed box 534, the third step 530 and the fourth step 532 are performed for each pair of 1D vectors of the plurality of pairs of 1D vectors to obtain a respective intermediate CA-CFAR result. The processing for each pair of 1D vectors may be performed in parallel or each pair of 1D vectors may be processed serially.

A fifth step 534 comprises combining the intermediate CA-CFAR results to provide a CA-CFAR output. Here, combining may refer to summing or combining via superposition (addition or subtraction) the intermediate CA-CFAR results.

The method may comprise obtaining a plurality of superposition coefficients from the kernel data. Each superposition coefficient may correspond to a respective pair of 1D vectors and indicate whether the intermediate CA-CFAR result corresponding to the respective pair of 1D vectors should be added or subtracted in the combining of the intermediate CA-CFAR results by superposition.

The disclosed apparatus and methods can perform a 2D CA-CFAR algorithm by dividing a 2D kernel into multiple 2D sub-kernels using superposition and then respective pairs of 1D vectors using spatial separation. The 2D CA-CFAR calculation can then be done by using only 1D convolutions which constitutes a reduction in the required instruction set as well as computational complexity.

Key features of the disclosure include:

- Splitting the 2D CFAR kernel into multiple 2D sub kernels
- Using spatial separation on the 2D sub kernels
- Convolve the data with the separated 1D vectors and combine the results.

By splitting the kernel into 1D vectors as described, the cell average is calculated with a complexity comparable to a cross-shaped kernel, but with the performance of a full kernel. Applying this kernel separation for a commonly used radar signal processing algorithm allows for its implementation on edge processing platforms due to its reduced memory footprint and computational complexity.

The disclosed apparatus and methods may be used to provide CFAR capability in applications that typically have processing power that limit CFAR radar processing capability. For example, the disclosed apparatus and methods can provide enhanced CFAR functionality in internet of things, automotive and mobile applications. In automotive applications, the disclosed apparatus and methods may be used in advanced driver assistance systems (ADAS). For example, CA-CFAR outputs which identify objects in the scene can be used as inputs for target tracking algorithms. Therefore, the disclosed apparatus and methods of CA-CFAR can affect a large number of use-cases where different types of radars are used, including, but not limited to:

- child presence detection

- seat occupancy classification
- intrusion detection
- kick sensing for easy trunk access
- approach sensing
- gesture sensing
- object detection in ADAS

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A cell-averaging constant false alarm rate, CA-CFAR, radar processor configured to:

   receive a two-dimensional radar data array;
   for each of a plurality of pairs of one-dimensional vectors:

   perform a convolution between the two-dimensional radar data array and a first one-dimensional vector of the pair of one-dimensional vectors to obtain an intermediate convolution result; and
   perform a convolution between the intermediate convolution result and a second one-dimensional vector of the pair of one-dimensional vectors to obtain an intermediate CA-CFAR result; and

   combine the intermediate CA-CFAR results to provide a CA-CFAR output.

2. The processor of claim 1, wherein the processor is configured to combine the intermediate CA-CFAR results using superposition.

3. The processor of claim 2, wherein the processor is configured to receive a plurality of superposition coefficients, each superposition coefficient corresponding to a respective pair of one-dimensional vectors, wherein the superposition coefficient indicates whether the intermediate CFAR result corresponding to the respective pair of one-dimensional vectors should be combined using addition or subtraction.

4. The processor of any preceding claim, wherein the processor is configured to obtain the plurality of pairs of one-dimensional vectors from stored kernel data, wherein if the stored kernel data only includes a single one-dimensional vector corresponding to a pair of one-dimensional vectors, the controller is configured to obtain the pair of one-dimensional vectors by:

> obtaining the single one-dimensional vector as a first one-dimensional vector of the pair of one-dimensional vectors; and
> transposing the single one-dimensional vector to obtain a second one-dimensional vector of the pair of one-dimensional vectors.

5. The processor of any preceding claim, wherein for each pair of one-dimensional vectors, convolution of the first one-dimensional vector with the second one-dimensional vector generates a respective two-dimensional sub-kernel; and superposition of each two-dimensional sub-kernel generates a two-dimensional CA-CFAR radar processing kernel.

6. A method for performing cell-averaging constant false alarm rate, CA-CFAR, radar processing, the method comprising:

> receiving a two-dimensional radar data array;
> for each of a plurality of pairs of one-dimensional vectors:

>> performing a convolution between the two-dimensional radar data array and a first one-dimensional vector of the pair of one-dimensional vectors to obtain an intermediate convolution result; and
>> performing a convolution between the intermediate convolution result and a second one-dimensional vector of the pair of one-dimensional vectors to obtain an intermediate CA-CFAR result; and

> combining the intermediate CA-CFAR results to provide a CA-CFAR output.

7. A processing apparatus configured to perform the method of claim 6.

8. An integrated circuit comprising the processing apparatus of claim 7.

9. A computer implemented method for simplifying a two-dimensional cell-averaging constant false alarm rate, CA-CFAR, radar processing kernel, the method comprising:

> receiving a two-dimensional CA-CFAR radar processing kernel;
> generating a plurality of two-dimensional sub-kernels from two-dimensional CA-CFAR radar processing kernel;
> spatially separating each of the plurality of two-dimensional sub-kernels into a respective pair of one-dimensional vectors; and
> storing kernel data representing the plurality of pairs of one-dimensional vectors in a memory of an integrated circuit.

10. The method of claim 9, wherein the plurality of two-dimensional sub-kernels satisfy a condition that the plurality of two-dimensional sub-kernels combine by superposition to form the two-dimensional CA-CFAR radar processing kernel.

11. The method of claim 10, wherein the kernel data comprises a plurality of superposition coefficients corresponding to each respective sub-kernel, wherein each superposition coefficient indicates whether the respective sub-kernel is combined by superposition using addition or subtraction.

12. The method of any of claims 9 to 11, wherein generating the plurality of two-dimensional sub-kernels comprises generating a plurality of spatially separable two-dimensional sub-kernels.

13. The method of any of claims 9 to 12, wherein storing the kernel data comprises storing only a first one-dimensional vector of the pair of one-dimensional vectors if the respective sub-kernel is symmetric.

**14.** The method of any of claims 9 to 13, further comprising:

>trimming one or more two-dimensional sub-kernels to remove outer zeros; or
>trimming one or more pairs of one-dimensional vectors to remove outer zeros.

**15.** A processing apparatus configured to perform the method of any of claims 9 to 14.

**Amended claims in accordance with Rule 137(2) EPC.**

**1.** A cell-averaging constant false alarm rate, CA-CFAR, radar processor configured to:

>receive a two-dimensional radar data array (202);
>for each of a plurality of pairs of one-dimensional vectors (404A-1, 404A-2, 404B-1, 404B-2, 404C-1, 404C-2):

>>perform a convolution between the two-dimensional radar data array (202) and a first one-dimensional vector (404A-1, 404B-1, 404C-1) of the pair of one-dimensional vectors to obtain an intermediate convolution result; and
>>perform a convolution between the intermediate convolution result and a second one-dimensional vector (404A-2, 404B-2, 404C-2) of the pair of one-dimensional vectors to obtain an intermediate CA-CFAR result; and

>combine the intermediate CA-CFAR results to provide a CA-CFAR output (208),

>wherein each pair of one-dimensional vectors satisfies a condition that:

>>convolution of the first one-dimensional vector (404A, 404B, 404C) with the second one-dimensional vector (404A-2, 404B-2, 404C-2) generates a respective two-dimensional sub-kernel (404A, 404B, 404C); and
>>superposition of each two-dimensional sub-kernel (404A, 404B, 404C) generates a two-dimensional CA-CFAR radar processing kernel (404).

**2.** The processor of claim 1, wherein the processor is configured to combine the intermediate CA-CFAR results using superposition.

**3.** The processor of claim 2, wherein the processor is configured to receive a plurality of superposition coefficients, each superposition coefficient corresponding to a respective pair of one-dimensional vectors (404A-1, 404A-2, 404B-1, 404B-2, 404C-1, 404C-2), wherein the superposition coefficient indicates whether the intermediate CFAR result corresponding to the respective pair of one-dimensional vectors should be combined using addition or subtraction.

**4.** The processor of any preceding claim, wherein the processor is configured to obtain the plurality of pairs of one-dimensional vectors (404A-1, 404A-2, 404B-1, 404B-2, 404C-1, 404C-2) from stored kernel data, wherein if the stored kernel data only includes a single one-dimensional vector corresponding to a pair of one-dimensional vectors, the controller is configured to obtain the pair of one-dimensional vectors by:

>obtaining the single one-dimensional vector as a first one-dimensional vector of the pair of one-dimensional vectors; and
>transposing the single one-dimensional vector to obtain a second one-dimensional vector of the pair of one-dimensional vectors.

**5.** A method for performing cell-averaging constant false alarm rate, CA-CFAR, radar processing, the method comprising:

>receiving (526) a two-dimensional radar data array (202);
>for each of a plurality of pairs of one-dimensional vectors (404A-1, 404A-2, 404B-1, 404B-2, 404C-1, 404C-2):

>>performing (530) a convolution between the two-dimensional radar data array (202) and a first one-dimensional vector (404A-1, 404B-1, 404C-1) of the pair of one-dimensional vectors to obtain an intermediate convolution result; and
>>performing (532) a convolution between the intermediate convolution result and a second one-dimensional vector (404A-2, 404B-2, 404C-2) of the pair of one-dimensional vectors to obtain an intermediate CA-CFAR result; and

combining (536) the intermediate CA-CFAR results to provide a CA-CFAR output,

wherein each pair of one-dimensional vectors (404A-1, 404A-2, 404B-1, 404B-2, 404C-1, 404C-2) satisfies a condition that:

convolution of the first one-dimensional vector (404A-1, 404B-1, 404C-1) with the second one-dimensional vector (404A-2, 404B-2, 404C-2) generates a respective two-dimensional sub-kernel (404A, 404B, 404C); and superposition of each two-dimensional sub-kernel (404A, 404B, 404C) generates a two-dimensional CA-CFAR radar processing kernel (404).

6. A processing apparatus configured to perform the method of claim 5.

7. An integrated circuit comprising the processing apparatus of claim 6.

8. A computer implemented method for simplifying a two-dimensional cell-averaging constant false alarm rate, CA-CFAR, radar processing kernel (404), the method comprising:

receiving a two-dimensional CA-CFAR radar processing kernel (404);
generating a plurality of two-dimensional sub-kernels (404A, 404B, 404C) from two-dimensional CA-CFAR radar processing kernel;
spatially separating each of the plurality of two-dimensional sub-kernels into a respective pair of one-dimensional vectors (404A-1, 404A-2, 404B-1, 404B-2, 404C-1, 404C-2); and
storing kernel data representing the plurality of pairs of one-dimensional vectors in a memory of an integrated circuit.

9. The method of claim 8, wherein the plurality of two-dimensional sub-kernels (404A, 404B, 404C) satisfy a condition that the plurality of two-dimensional sub-kernels combine by superposition to form the two-dimensional CA-CFAR radar processing kernel (404).

10. The method of claim 9, wherein the kernel data comprises a plurality of superposition coefficients corresponding to each respective sub-kernel (404A, 404B, 404C), wherein each superposition coefficient indicates whether the respective sub-kernel is combined by superposition using addition or subtraction.

11. The method of any of claims 8 to 10, wherein generating the plurality of two-dimensional sub-kernels (404A, 404B, 404C) comprises generating a plurality of spatially separable two-dimensional sub-kernels.

12. The method of any of claims 8 to 11, wherein storing the kernel data comprises storing only a first one-dimensional vector (404A-1, 404B-1, 404C-1) of the pair of one-dimensional vectors if the respective sub-kernel is symmetric.

13. The method of any of claims 8 to 12, further comprising:

trimming one or more two-dimensional sub-kernels (404A, 404B, 404C) to remove outer zeros; or
trimming one or more pairs of one-dimensional vectors (404A-1, 404A-2, 404B-1, 404B-2, 404C-1, 404C-2) to remove outer zeros.

14. A processing apparatus configured to perform the method of any of claims 8 to 13.

Figure 1

Figure 2

Figure 3A

Figure 3B

Figure 4

Receive 2D radar data array — 526

Receive plurality of pairs
of 1D vectors — 528

— 534

Perform convolution between
2D radar data array and first 1D
vector of pair of 1D vectors to obtain
intermediate convolution result — 530

Perform convolution between
intermediate convolution result
and second 1D vector of
pair of 1D vectors to obtain
intermediate CA-CFAR result — 532

**Perform for each
pair of 1D vectors**

Combine intermediate
CA-CFAR results to provide
CA-CFAR output — 536

Figure 5

Europäisches Patentamt
European Patent Office
Office européen des brevets

## EUROPEAN SEARCH REPORT

Application Number

EP 24 20 0030

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 253 992 A1 (NXP BV [NL]) 4 October 2023 (2023-10-04) * abstract * * paragraphs [0001], [0004], [0005] * * paragraphs [0013] - [0017]; figures 3A,3B * * paragraphs [0041], [0042]; figure 9 * | 1-15 | INV. G01S7/292 G01S7/35 G01S13/00 G01S13/58 G01S13/931 |
| A | LIU CHEN ET AL: "CA-CFAR is Convolution: Fast Target Detection with Machine Learning Accelerator", 2024 13TH MEDITERRANEAN CONFERENCE ON EMBEDDED COMPUTING (MECO), IEEE, 11 June 2024 (2024-06-11), pages 1-6, XP034632824, DOI: 10.1109/MECO62516.2024.10577789 [retrieved on 2024-07-03] * abstract * * paragraphs [00II], [0III] * | 1-15 | |
| A | PETROVIC M L ET AL: "A Hardware Generator of Two-Dimensional Cell- Averaging Constant False Alarm Rate Processors", 2023 IEEE 33RD INTERNATIONAL CONFERENCE ON MICROELECTRONICS (MIEL), IEEE, 16 October 2023 (2023-10-16), pages 1-4, XP034471155, DOI: 10.1109/MIEL58498.2023.10315827 [retrieved on 2023-11-17] * abstract * * paragraphs [000I], [00II] * | 1-15 | TECHNICAL FIELDS SEARCHED (IPC) G01S |

The present search report has been drawn up for all claims

| Place of search | Date of completion of the search | Examiner |
|---|---|---|
| Munich | 19 February 2025 | van Norel, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 0030

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2025

| Patent document cited in search report | | Publication date | Patent family member(s) | | Publication date |
|---|---|---|---|---|---|
| EP 4253992 | A1 | 04-10-2023 | CN | 116893398 A | 17-10-2023 |
| | | | EP | 4253992 A1 | 04-10-2023 |
| | | | US | 2023314560 A1 | 05-10-2023 |

EPO FORM P0459

For more details about this annex : see Official Journal of the European Patent Office, No. 12/82